# EUROPÄISCHE PATENTANMELDUNG

(11) **EP 1 424 179 A2**
(43) Veröffentlichungstag der Anmeldung: **02.06.2004**
(21) Anmeldenummer: 03450248.4
(22) Anmeldetag: 06.11.2003
(51) Int. Cl.: B29B 9/14

(54) **Langfasergranulat**

(30) Priorität: 28.11.2002 AT 17872002
(71) Anmelder: Svoboda, Bruno, 1140 Wien (AT)
(72) Erfinder: Svoboda, Bruno, 1140 Wien (AT)
(74) Vertreter: Gibler, Ferdinand, Dipl.Ing. Dr.

(57) **Zusammenfassung**

Langfasergranulat aus Granulatkörnern (11), die ein Gemenge aus schraubenförmig angeordneten Verstärkungsfasern und thermoplastischen Fasern aufweisen, wobei im Granulatkorn eine Kern-Mantel-Struktur vorliegt, im Kern (1) das Gemenge angeordnet ist, und der Mantel (2) zur Gänze aus thermoplastischem Kunststoff gebildet ist.

## Beschreibung

Die Erfindung betrifft ein Langfasergranulat aus Granulatkörnern, die ein Gemenge aus schraubenförmig angeordneten Verstärkungsfasern und thermoplastischen Fasern aufweisen.

Faserverstärkte Granulate werden bereits seit vielen Jahren als Ausgangsmaterialien zur Herstellung von faserverstärkten Kunststoffbauteilen verwendet. Dabei werden kurzfaserhaltige und langfaserhaltige Granulate unterschieden.

Kurzfasige Graulate werden durch die Compoundierung von Verstärkungsfasern und dem jeweiligen Matrixmaterial mit Hilfe eines Extruders hergestellt, wobei die Verstärkungsfasern dem Extruder endlos oder geschnitten zudosiert werden können. Durch die Scherwirkung der Schnecken erfolgt eine Einkürzung der Verstärkungsfasern. Gleichzeitig werden die Verstärkungsfasern in der Polymerschmelze fein verteilt und mit dem Matrixmaterial benetzt. Die Verstärkungsfasern haben im Granulatkom keine gerichtete Orientierung. Die Faserlänge der Verstärkungsfasern ist bei diesen Kurzfasergranulaten in der Regel kleiner als die Granulatlänge und liegt normalerweise unter einem Millimeter. Es gibt aber auch Granulate, wo die Faserlänge einiger Kurzfasern größer als die Granulatlänge ist (JP-A-6-254 847). Bei diesem Granulat ist allerdings keine gerichtete Faserorientierung realisierbar.

Langfasergranulate mit gerichteter Faserorientierung werden in der Regel durch Strangziehen (Pultrusion) hergestellt. Dabei werden endlose Faserstränge (Rovings) in einem Pultrusionswerkzeug mit Polymerschmelze getränkt, nachfolgend abgekühlt und abgelängt. Die Verstärkungsfasern sind im Granulatkorn parallel zueinander angeordnet. Dadurch entspricht bei den langfaserverstärkten Granulaten die Verstärkungsfaserlänge in der Regel der Schnittlänge der Granulatkörner. Problematisch ist bei diesem Verfahren vor allem die Erreichung einer vollständigen Durchtränkung der Verstärkungsfaserrovings bei der späteren Verarbeitung. Diese konventionellen Langfasergranulate haben eine Kern-Mantel-Struktur, bei der die Verstärkungsfasern im Kern angeordnet sind und der Mantel aus Matrixpolymer gebildet ist. Nachteilig an diesen bekannten Langfasergranulaten ist, daß eine für die weitere Verarbeitung erwünschte vollständige Durchtränkung der Verstärkungsfasern mit dem Matrixpolymer nur durch eine intensive Scherung des Materials erreicht werden kann, welche zu einer starken Einkürzung der Verstärkungsfasern führt, wobei dennoch oftmals nicht benetzte Fasernester ausgebildet werden.

Durch die WO 00/58064 wurde ein Langfasergranulat bekannt, deren Körner eine Kern-Mantel-Struktur aufweisen und bei denen eine Fasermischung aus thermoplastischen Fasern und Verstärkungsfasern, vorzugsweise Naturfasern, schraubenförmig angeordnet ist. Dabei befinden sich Verstärkungsfasern zusammen mit verschmolzenem thermoplastischen Fasern in der Mantelzone der Körner und liegen Verstärkungsfasern zusammen mit unverschmolzenen thermoplastischen Fasern in der Kernzone.

Im selben Dokument sind auch eine Vorrichtung und ein Verfahren zur Herstellung eines solchen Granulats offenbart. Es wird dabei ein Faserband (gebildet durch eine Mischung aus Verstärkungsfasern und thermoplastischen Fasern) über Abzugswalzen aus einem Vorratsbehälter abgezogen und einer Vorheizzone zugeführt, wo die Matrixfasern in der Mantelzone des Bandes oberflächlich aufgeschmolzen werden. Nach dem Verlassen der Vorheizzone durchläuft der aufgeheizte Materialstrang eine beheizte Düse, die eine Kalibrierung des Strangquerschnitts bewirkt und anschließend eine Kühlzone, wo das Matrixmaterial wieder abgekühlt und konsolidiert wird. Die Drehung des Stranges erfolgt am Ende der Kühlzone durch ein kombiniertes Abzugs- und Drehorgan. Der Strang wird abschließend mittels eines Granulators zu Granulatkömern abgelängt.

Nachteilig hat sich bei diesem Verfahren bzw. dieser Vorrichtung insbesondere die die Aufheizung der Mantelzone durchführende Vorheizzone erwiesen: Da das Faserband -zwecks Bewirkung eines insgesamt raschen Ablaufes des Herstellverfahrens- relativ schnell durch die Vorheizzone geführt wird, muß diese baulich relativ groß ausgeführt und mit relativ hoher Heizleistung ausgestattet sein. Daraus ergibt sich ein hoher Platzbedarf sowie ein hoher Energieverbrauch. Mit den großen baulichen Abmessungen geht eine schlechte Regelbarkeit der Vorheizzone einher, sowie eine hohe thermische Belastung der Verstärkungsfasern, wodurch bei thermisch empfindlichen Verstärkungsfasern, insbesondere Naturfasern od. dgl., oftmals eine Beschädigung der Verstärkungsfasern auftritt.

Aufgabe der Erfindung ist es, diese Nachteile zu vermeiden und ein Langfasergranulat der eingangs angeführten Art anzugeben, welches mit geringem Energieaufwand hergestellt werden kann, und bei dem auch bei einer hohen Produktionsleistung eine geringe thermische Belastung der Verstärkungsfasern erreichbar ist.

Erfindungsgemäß wird dies dadurch erreicht, daß im Granulatkom eine Kern-Mantel-Struktur vorliegt, daß im Kern das Gemenge angeordnet ist, und daß der Mantel zur Gänze aus thermoplastischem Kunststoff gebildet ist.

Zur Aufschmelzung von thermoplastischem Kunststoff können deutlich kleinere Heizungen eingesetzt werden, die einen bedeutend geringeren Energieverbrauch haben. Ein weiterer Vorteil des erfindungsgemäßen Langfasergranulats ist, daß der thermoplastische Kunststoff im aufgeschmolzenen Zustand dem Faserband zugeführt werden kann. Dabei kann der Hauptanteil der thermoplastischen Faser in dem Faserband im Kern angeordnet sein und der Mantel nur eine dünne Schicht aufweisen, welche der Fixierung des verdrillten Faserbandes im Granulatkorn dient. Durch den Mantel aus theromplastischen Kunststoff wird die Verdrillung gefestigt und erhalten, sodaß das Faserband nach seiner Ablängung zu Granulatkörnern seine Form, insbesondere eine Stäbchenform, beibehält. Eine gute Rieselfähigkeit und Verarbeitbarkteit in einem nachfolgenden Spritzgießprozeß wird durch eine kompakte und feste Ausbildung des Granulatkorns erreicht.

Dadurch, daß der Mantel zur Gänze aus thermoplastischem Kunststoff gebildet ist, ergibt sich eine besonders stabile Schicht, die mit einer geringen Dicke ausgebildet werden können. Weiters können in diesem Bereich keine Verstärkungsfasern beschädigt werden.

Ein weiterer Vorteil ist, daß für den Mantel ein vom Material der im Kern angeordneten thermoplastischen Fasern unterschiedliches Material vorgesehen sein kann, wobei das Material des Mantels insbesondere Zusatzsstoffe, z.B. Schlagzähmodifizierer, UVBeständigkeitsmodifizierer, Haftvermittler, Färbemittel od. dgl., enthalten kann.

In weiterer Ausgestaltung der Erfindung kann vorgesehen sein, daß die Verstärkungsfasern Naturfasern, Synthesefasern oder Mineralfasern sind, da derartige Fasern besonders gute Verstärkungswirkung aufweisen, wobei als Naturfasern insbesondere Flachs, Jute, Hanf, Sisal od. dgl. eingesetzt werden können.

Weiters kann vorgesehen sein, daß der den Mantel bildende thermoplastische Kunststoff Polypropylen, Polyethylen oder Polyamid ist. Diese Werkstoffe eignen sich besonders gut zur Herstellung von faserverstärkten Kunststoffteilen.

Schließlich kann vorgesehen sein, daß der den Mantel bildende thermoplastische Kunststoff Zusatzstoffe, insbesondere Schlagzähmodifizierer, UV-Beständigkeitsmodifizierer, Haftvermittler, Färbemittel od. dgl., enthält. Dadurch können gewünschte Eigenschaften der aus dem Langfasergranulat erzeugten Teile auf einfache Weise ohne zusätzlichen Arbeitsschritt erreicht werden.

Weitere Aufgabe der Erfindung ist es, ein Verfahren zur Herstellung von Langfasergranulat, dessen Granulatkörner eine Kern-Mantel-Struktur aufweisen, aus einem Faserband aus einem Gemenge von Verstärkungsfasern und thermoplastischen Fasern, wobei das Gemenge durch Verdrillen des Faserbandes schraubenförmig angeordnet wird, anzugeben.

Das Verfahren soll sich insbesondere durch geringen Energieverbrauch auszeichnen bzw. soll die zur Durchführung dieses Verfahrens benötigte Energiemenge möglichst gering sein, sowie eine hohe Produktionsleistung ermöglichen.

Erfindungsgemäß wird dies dadurch erreicht, daß um das verdrillte Faserband der Mantel zur Gänze aus aufgeschmolzenem thermoplastischem Kunststoff ausgebildet wird, der Kunststoff abgekühlt und konsolidiert wird und der dabei entstandene Materialstrang zu Granulatkörnern abgelängt wird.

Das Aufschmelzen von thermoplastischem Kunststoff läßt sich mit kleinen, nur geringe Heizleistung aufweisenden Heizkörpern bewerkstelligen, womit die aufgabengemäßen Anforderungen in zufriedenstellender Weise erreicht werden. Da für die Ausbildung des Mantels nur geringe Kunststofmengen erforderlich sind, kann der Energieverbrauch gering gehalten werden. Weiters können der Mantel und die thermoplastischen Fasern aus unterschiedlichen Kunststoffen ausgebildet werden.

In Weiterbildung der Erfindung kann vorgesehen sein, daß bei der Ausbildung des Mantels das Faserband mit aufgeschmolzenem thermoplastischem Kunststoff umgossen wird. Dadurch kann die Wärmebelastung des Faserstranges besonders gering gehalten werden und

Zusatzstoffe auf einfache Weise dem Mantel beigemengt werden. Der thermoplastische Kunststoff des Mantels kann unabhängig von dem Faserband, insbesondere in einem Extruder od. dgl., aufgeschmolzen werden und die Schmelze bei hoher Durchlaufgeschwindigkeit auf das verdrillte Faserband in einer Beschichtung- und Kalibriereinheit aufgebracht werden.

Gemäß einer andere Ausführungsform der Erfindung kann vorgesehen sein, daß bei der Ausbildung des Mantels eine Folie, mehrere Bänder und/oder Stränge, od. dgl. aus thermoplastischem Kunststoff um das Faserband angeordnet und aufgeschmolzen wird/werden. Diese Ausführungsform kann mit einem besonders geringen apparativen Aufwand ausgebildet werden.

Weitere Aufgabe der Erfindung ist es, eine Vorrichtung zur Herstellung von Langfasergranulat, insbesondere der oben beschriebenen Art, aus einem Faserband aus einem Gemenge von Verstärkungsfasern und thermoplastischen Fasern mit einer Beschichtungs- und Kalibrierungseinheit, einer Kühlzone, einem Abzugs- und Drehorgan und einem Granulator anzugeben. Diese Vorrichtung soll sich zur Herstellung des oben erörterten Langfasergranulats eignen und insbesondere einen geringen Platz- und Energiebedarf aufweisen.

Erfindungsgemäß wird dies dadurch erreicht, daß die Beschichtungs- und Kalibrierungseinheit eine Heizdüse mit einer konisch zulaufenden Bohrung umfaßt, wobei das Faserband durch die Bohrung hindurch führbar ist, und daß in die Bohrung wenigstens eine Zuführöffnung für eine Schmelze aus thermoplastischem Kunststoff mündet.

Eine solcherart aufgebaute Heizdüse kann mit geringen Abmessungen ausgeführt werden und erfüllt damit die Anforderungen nach geringem Platz- und Energiebedarf besonders gut.

Die Erfindung wird unter Bezugnahme auf die beigeschlossenen Zeichnungen, in welchen besonders bevorzugte Ausführungsbeispiele dargestellt sind, näher beschrieben. Dabei zeigt:
Fig. 1 einen Längsschnitt durch ein Granulatkorn eines erfindungsgemäßen Langfasergranulates;
Fig.2 einen Querschnitt durch das Granulatkorn nach Fig. 1;
Fig. 3 einen Querschnitt durch eine Ausführungsform einer Beschichtungs- und
Kalibriereinheit;
Fig.4 eine schematische Darstellung einer Ausführungsform einer erfindungsgemäßen Vorrichtung zur Herstellung des Langfasergranulats; und
Fig.5 eine schematische Darstellung einer anderen Ausführungsform einer erfindungsgemäßen Vorrichtung zur Herstellung des Langfasergranulats.

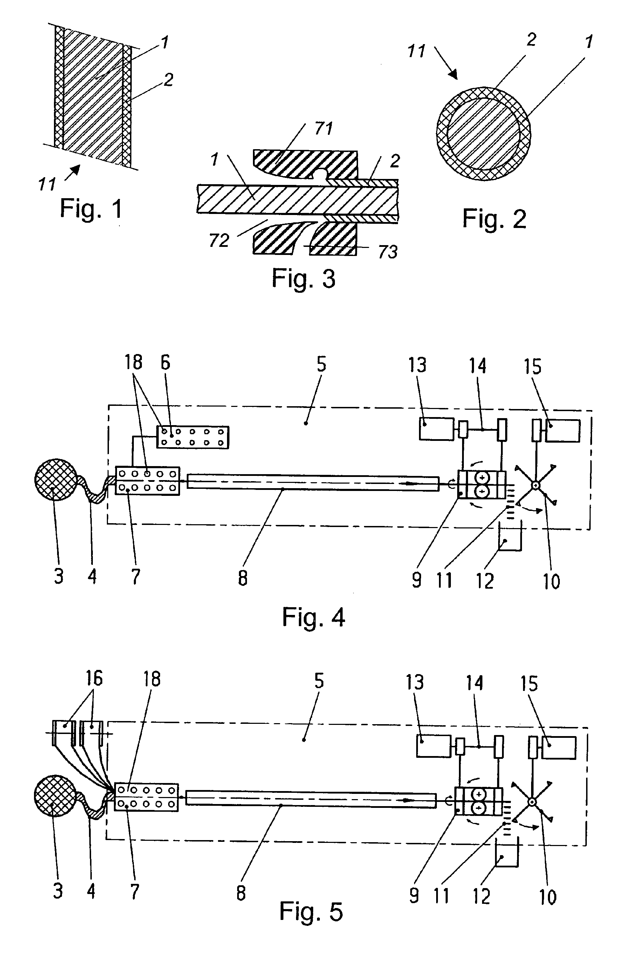

Ein Granulatkom 11 eines erfindungsgemäßen Langfasergranulats, von welchem eine Ausführungsform in den Fig. 1 und 2 dargestellt ist, weist eine Kern-Mantel-Struktur auf, wobei im Kern 1 ein Gemenge aus schraubenförmig angeordneten Verstärkungsfasern und thermoplastischen Fasern angeordnet ist. Diese schraubenförmige Anordnung der Fasern entsteht durch Verdrillen eines Faserbandes aus einem Gemenge aus Verstärkungsfasern und thermoplastischen Fasern das als Ausgangsprodukt bei der Herstellung des erfindungsgemäßen Langfasergranulats verwendet wird. Der Mantel 2 ist frei von Verstärkungsfasern gehalten und ist zur Gänze aus thermoplastischem Kunststoff gebildet.

Das Material der Verstärkungsfasern kann beliebig bzw. der ins Auge gefaßten Verwendung des Granulats entsprechend gewählt werden, beispielsweise können Naturfasern, Synthesefasern und Mineralfasern angeführt werden. Geeignete Faser sind beispielsweise Flachs-, Hanf- und Jutefasern sowie Glas-, Aramid- Kohlenstoffasern- und Zellulosefasern.

Für den Mantel 2 kann lediglich ein Kunststoff - beispielsweise seien Polypropylen, Polyethylen und Polyamid angeführt - oder eine Mischung aus mehreren Kunststoffen verwendet werden.. Der Kunststoff bzw. die Kunststoffe des Mantels 2 können mit einem oder mehreren Zusatzstoffen, insbesondere Färbemittel oder anderen Komponenten zur Eigenschaftsbeeinflussung wie z.B. Schlagzähmodifizierer, Haftvermittler, Fließverbesserer od. dgl., versetzt sein.

Der thermoplastische Kunststoff des Mantels 2 und die thermoplastischen Fasern können aus unterschiedlichen Kunststoffen und/oder Kunststoffgemisches sein.

In den Fig. 4 und 5 sind Ausführungsformen einer erfindungsgemäßen Vorrichtung 5 zur Herstellung des erfindungsgemäßen Langfasergranulats schematisch dargestellt. Der Vorrichtung 5 wird das Faserband 4 aus einem Gemenge von Verstärkungsfasern und thermoplastischen Fasern aus einem Vorratsbehälter 3 oder einer Faserband-Produktionsanlage zugeführt. Die Vorrichtung 5 weist eine Beschichtungs- und

Kalibriereinheit 7 auf, in der der zur Gänze aus thermoplastischem Kunststoff gebildete Mantel 2 auf das Faserband 4 aufgebracht wird, eine Kühlzone 8, in der der thermoplastische Kunststoff abgekühlt, erhärtet und konsolidiert wird, einem Abzugs- und Drehorgan 9, welches das Faserband 4 verdrillt und in seiner Längsrichtung bewegt, und einem Granulator 10, welcher den entstandenen Materialstrang zu Granulatkörnern 11 ablängt.

Die Drehung des Faserbandes 4 erfolgt am Ende der Kühlzone 8 durch das kombiniertes Abzugs- und Drehorgan 9. Kernstück einer Ausführungsform des kombinierten Abzugs- und

Drehorgans 9 sind Walzen, die eine Rotation gegeneinander für den Abzug des zwischen ihnen befindlichen Faserbandes 4 und eine Rotation um die Bandachse für die Verdrillung ausführen. Die Bauweise eines solchen kombinierten Drallgebers ist aus der Textilindustrie bekannt und in der Literatur beschrieben (W. Wegener: "Die Streckwerke der Spinnereimaschinen"). Angetrieben wird das kombinierte Abzugs- und Drehorgan 9 von einem Motor 13 über ein Getriebe 14. Durch Änderung der Übersetzungsverhältnisse kann die Schlaglänge (Verdrilllänge) des Faserbandes beeinflusst werden.

Die Drehung des Faserbandes 4 erstreckt sich von dem Abzugs- und Drehorgan 9 durch die Kühlzone 8 bis in die Beschichtungs- und Kalibriereinheit 7 und wird vorzugsweise durch Reibung begrenzt. Das Faserband 4 wird mit Hilfe des Granulators 10 zu Granulatkörnern 11 abgelängt, welche in einem Vorratsbehälter 12 aufgefangen werden. Durch die in den Fig. 4 und 5 gezeigte Bauart des Granulators 10 kann sichergestellt werden, daß das Faserband 4 auch während des Abschneidvorgangs frei rotieren kann.

Der Granulator 10 wird von einem weiteren Motor 15 angetrieben. Durch Veränderung des Drehzahlverhältnisses zwischen dem Motor 13 und dem weiteren Motor 15 kann die Länge der erzeugten Granulatorkörner 11 beeinflusst werden.

Die erzeugten Granulatkörner 11 haben eine Kern-Mantel-Struktur, wobei der Mantel 2 zur Gänze aus thermoplastischem Kunststoff ausgebildet ist und der Kern 1 zur Gänze Fasermaterial aus Verstärkungsfasem und thermoplastischen Fasern aufweist. Mit dieser Vorrichtung kann das Faserband in einem kontinuierlichen Verfahren definiert tordiert werden.

Bei der in Fig. 4 gezeigten Ausführungsform der Vorrichtung 5 ist ein Schmelzeerzeuger 6 vorgesehen, in dem die den Mantel 2 bildende Schmelze bzw. das Schmelzgemisch aus thermoplastischem Kunststoff aufbereitet und der Beschichtungs- und Kalibriereinheit 7 zugeführt wird. Die Schmelze wird im Schmelzerzeuger 6 und der Beschichtungs- und Kalibriereinheit 7 mittels Heizelementen 18 auf Schmelztemperatur gehalten.

In Fig. 3 ist eine bevorzugte Ausführungsform der Beschichtungs- und Kalibriereinheit 7 im Schnitt dargestellt, wobei die Beschichtungs- und Kalibriereinheit 7 eine Heizdüse 71 mit einer konisch zulaufenden Bohrung 72 umfaßt, wobei das Faserband 4 durch die Bohrung 72 hindurch führbar ist. In die Bohrung 72 mündet eine Zuführöffnung 73 für die Schmelze aus thermoplastischem Kunststoff. Die Zuführöffnung 73 ist mit dem Schmelzerzeuger 6 verbunden.

Bei der in Fig. 5 gezeigten Ausführungsform der Vorrichtung 5 wird der Beschichtungs- und Kalibriereinheit 7 neben dem Faserband 4 eine Folie 16, mehrere Bänder und/oder Stränge od. dgl. aus thermoplastischem Kunststoff zugeführt, die in der Beschichtungs- und Kalibriereinheit 7 um das Faserband 4 angeordnet und mittels Heizelementen 18 aufgeschmolzen werden, wodurch der Mantel 2 ausgebildet wird.

## Patentansprüche

1. Langfasergranulat aus Granulatkörnern (11), die ein Gemenge aus schraubenförmig angeordneten Verstärkungsfasern und thermoplastischen Fasern aufweisen, **dadurch gekennzeichnet, daß** im Granulatkom eine Kern-Mantel-Struktur vorliegt, daß im Kern (1) das Gemenge angeordnet ist, und daß der Mantel (2) zur Gänze aus thermoplastischem Kunststoff gebildet ist.

2. Langfasergranulat nach Anspruch 1, **dadurch gekennzeichnet, daß** die Verstärkungsfasern Naturfasern, Synthesefasern oder Mineralfasern sind.

3. Langfasergranulat nach Anspruch 1 oder 2, **dadurch gekennzeichnet, daß** der den Mantel (2) bildende thermoplastische Kunststoff Polypropylen, Polyethylen oder Polyamid ist.

4. Langfasergranulat nach einem der Ansprüche 1, 2 oder 3, **dadurch gekennzeichnet, daß** der den Mantel (2) bildende thermoplastische Kunststoff Zusatzstoffe, insbesondere Schlagzähmodifizierer, UV-Beständigkeitsmodifizierer, Haftvermittler, Färbemittel od. dgl., enthält.

5. Verfahren zur Herstellung von Langfasergranulat, dessen Granulatkörner (11) eine Kern-Mantel-Struktur aufweisen, aus einem Faserband (4) aus einem Gemenge von Verstärkungsfasern und thermoplastischen Fasern, wobei das Gemenge durch Verdrillen des Faserbandes (4) schraubenförmig angeordnet wird, **dadurch gekennzeichnet, daß** um das verdrillte Faserband (4) der Mantel (2) zur Gänze aus aufgeschmolzenem thermoplastischem Kunststoff ausgebildet wird, der Kunststoff abgekühlt und konsolidiert wird und der dabei entstandene Materialstrang zu Granulatkörnern (11) abgelängt wird.

6. Verfahren nach Anspruch 5, **dadurch gekennzeichnet, daß** bei der Ausbildung des Mantels (2) das Faserband (4) mit aufgeschmolzenem thermoplastischem Kunststoff umgossen wird.

7. Verfahren nach Anspruch 5, **dadurch gekennzeichnet, daß** bei der Ausbildung des Mantels (2) eine Folie (16), mehrere Bänder und/oder Stränge, od. dgl. aus thermoplastischem Kunststoff um das Faserband (4) angeordnet und aufgeschmolzen wird/werden.

8. Vorrichtung zur Herstellung von Langfasergranulat, insbesondere gemäß einem der Ansprüche 1 bis 5, aus einem Faserband (4) aus einem Gemenge von Verstärkungsfasern und thermoplastischen Fasern mit einer Beschichtungs- und Kalibrierungseinheit (7), einer Kühlzone (8), einem Abzugs- und Drehorgan (9) und einem Granulator (10), **dadurch gekennzeichnet, daß** die Beschichtungs- und Kalibrierungseinheit (7) eine Heizdüse (71) mit einer konisch zulaufenden Bohrung (72) umfaßt, wobei das Faserband (4) durch die Bohrung (72) hindurch führbar ist, und daß in die Bohrung (72) wenigstens eine Zuführöffnung (73) für eine Schmelze aus thermoplastischem Kunststoff mündet.
